# EUROPEAN PATENT SPECIFICATION

(11) **EP 1 962 442 B1**
(45) Date of publication and mention of the grant of the patent: **11.07.2012**
(21) Application number: 08150946.5
(22) Date of filing: 01.02.2008
(51) Int. Cl.: H04B 7/185

(54) **A method and system for the remote control of aircraft**
Verfahren und System zur Fernsteuerung eines Flugzeugs
Procédé et système pour le contrôle à distance d'un avion

(30) Priority: 01.02.2007 IT TO20070073
(43) Date of publication of application: 27.08.2008
(73) Proprietor: Alenia Aermacchi S.p.A., 21040 Venegono Superiore (Varese) (IT)
(72) Inventor: Spensatellu, Tonino, 10073 Cirie' (Torino) (IT)
(74) Representative: Deambrogi, Edgardo

(56) References cited:
- DE-A1- 10 047 427
- GB-A- 2 052 217

## Description

The present invention relates in general to the remote control of aircraft and specifically to a method and a system for the remote control of an aircraft, particularly a pilotless aircraft, with robustness and redundancy characteristics.

A system for the remote control of an aircraft can be used to support a pilot in the control of on-board service or auxiliary apparatus, for example, for the control of surveillance photography devices or other apparatus specific to the mission, allowing the pilot to concentrate on the flight controls, or to replace a pilot completely in any flight operation in pilotless aircraft. In the latter case, for pilotless aircraft, that is, aircraft which carry autonomous control software on board and which are adapted to receive the details of a mission and store them when on the ground and are arranged to perform assigned missions without remote control, such remote control systems are used during flight operations at a testing stage with a view to achieving complete reliability of the on-board control software.

In general, known systems for the remote control of an aircraft from the ground provide, on board the aircraft, a receiving arrangement with redundancy which is based on the use of two receiving antennae that are separately located on the aircraft so as to apply a receiving technique with spatial diversity, and a circuit for selecting the better signal from the pair of signals received.

In this arrangement, the selection circuit does not perform any check on the provenance and consistency of the signal, that is, it does not carry out any interpretation of the data and commands carried by the signals received but is limited to selecting the signal that has the better electromagnetic characteristics. Disadvantageously, this means that an interfering signal may be selected as the better signal and the useful signal may be discarded.

The object of the present invention is to provide a method and a system for the remote control of an aircraft, in particular a pilotless aircraft, that has robustness and redundancy characteristics and a simple, safe and relatively economical architecture, so as to permit effective control of the aircraft, preventing the problems of the prior art.

A further object of the invention is to provide a system for the remote control of an aircraft which does not compromise the reliability of the aircraft in the event of a malfunction of the system.

According to the present invention, these objects are achieved by means of a remote control method having the characteristics specified in Claim 1 and a remote control system having the characteristics specified in Claim 10.

Specific embodiments form the subjects of the dependent claims.

In summary, the present invention is based upon the principle of providing a remote control system that is based upon: the transmission of commands from a remote station, for example, a ground control station, to an on-board receiving device, the commands being packed in a flow of command signals in the form of a continuous signal with PCM modulation, including continuous flying/service commands and discrete commands; the conversion of the PCM signal into a serial signal (for example, in accordance with the RS232 standard format) in the on-board receiving device; and the processing of the discrete commands forming part of the signal flow, in which each discrete command is transmitted, replicated, in a frame comprising the command datum and its replica with intercalated bits, thus forming a frame comprising a sequence of pairs of identical bits, to prevent false interpretations.

The on-board receiving arrangement advantageously comprises a plurality of receiving channels each of which includes a signal receiver unit that can receive, in a redundant manner, a flow of command signals encoded in continuous-signal form with PCM modulation in the same or (preferably) different bands of the electromagnetic spectrum, an associated decommutating module for converting the PCM signal and restoring it to serial-signal form (for example, in accordance with the RS232 standard format), and a corresponding unit for processing the discrete command signals forming part of the flow of command signals.

A priority selection unit is arranged for receiving, from the plurality of channels, the continuous command signals supplied by the decommutating modules and the discrete command signals supplied by the corresponding discrete command-processing units and selecting the better command signals from the pair for each type of command on the basis of a predetermined criterion.

The priority selection unit distinguishes the better command signal on the basis of a predetermined logic for checking the quality of the two input signal flows and makes it available to an on-board flight-control system for the interpretation and execution of the flight commands.

The discrete commands (for example: the commands to lower the undercarriage, the commands for the selection, activation/de-activation of the on-board surveillance photography devices, the commands for adjusting the fuel valves, etc.) are transmitted within the same PCM-encoded flow and are sent to the priority selection unit after their processing in the respective discrete command-signal processing units.

On board the aircraft, the receiving circuit arrangement of the invention, by adopting the methodologies of signal decoding, unpacking and converting into RS232 serial format, make available at least a pair of serial lines provided with redundancy, which bring the signals to respective discrete command-signal processing units that can unpack and further decode the serial signals into pairs of discrete signals, precisely re-establishing the command transmitted from the ground.

A command then becomes active only after a validation process between the pairs of decoded discrete signals; this process comprises an equality comparison performed on the state of each pair of successive bits forming part of two intercalated command data and a check that the same state persists for at least three frames (cycles).

In this case again, the validated signal with redundancy is processed by the priority selection unit which is arranged to select the best signal and to authorize an unambiguous command by means of a discrete signal switching unit.

The priority selection unit advantageously comprises electromechanically-operating devices (relays) for switching between redundant signal channels, and having a predefined default position corresponding to a predetermined command signal in the event of breakdown so that, if an electrical breakdown of the unit (for example, the lack of a power supply) occurs, the switching of the discrete commands to a predefined emergency state is ensured, which would not be possible with a construction of the unit based exclusively on the use of logic circuits.

In contrast with known techniques which perform the selection of the best signal upstream of the circuits arranged for its interpretation, for which a single decommutating module is generally used downstream of the receiver units, according to the invention the selection is performed on the basis of the interpreted command signals so that a decommutating module is provided for each receiving channel, as well as a corresponding discrete command-signal processing unit, in order to interpret the command data transmitted by the PCM flow so that, for correctly recognized redundant data, the priority selection unit can select that which is transmitted by the best signal.

The on-board receiving arrangement is advantageously adapted to receive signals provided with redundancy on a first transmission S-band and a second, alternative, UHF transmission band. The S-band transmission channel is preferred in the operating logic. The priority selection unit switches to the alternative, UHF band solely in the event of poor reception. In this case, the system is preferably arranged to remain locked onto the alternative, UHF-band channel, resuming the checks as to which is the best channel, and performs a switch only if the reception conditions of the current, UHF-band signal become worse.

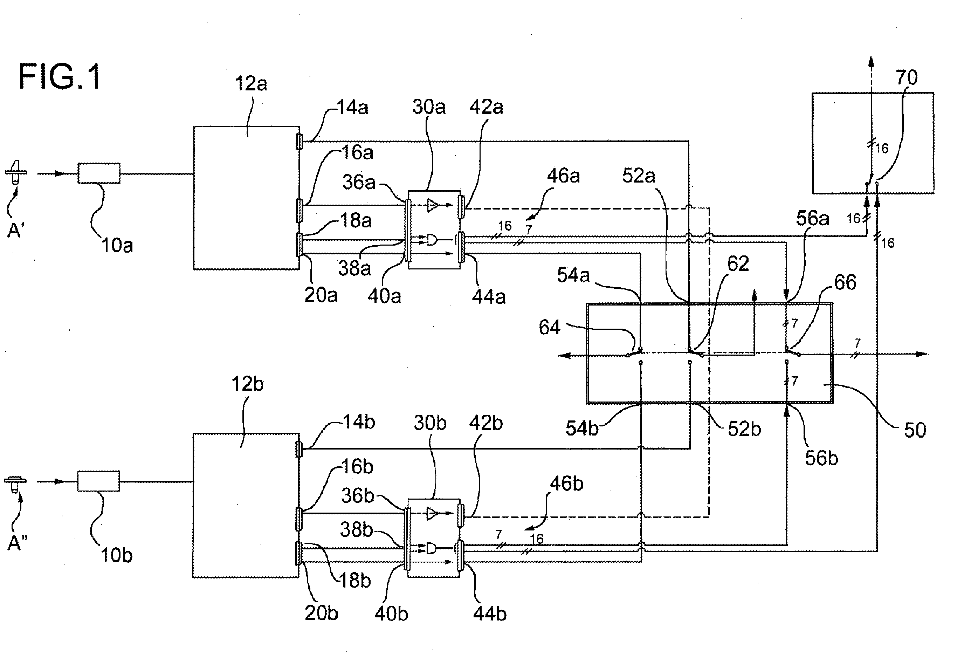

Further characteristics and advantages of the invention will be described in greater detail in the following detailed description of an embodiment thereof which is given by way of non-limiting example with reference to the appended drawing which shows a block diagram of an on-board receiving arrangement of the remote control system of the invention.

The system of the invention is arranged for the processing of command signals packed in a PCM-encoded continuous flow comprising continuous commands and discrete commands.

The former, which are encoded conventionally in accordance with a PCM technique, represent signals for controlling flight operations such as take-off, flight at altitude, and landing, and signals for controlling service apparatus, generally manoeuvring commands.

The latter represent commands for the activation or de-activation of on-board apparatus or devices the control of which is required at discontinuous moments in time, generally event commands.

The on-board circuit arrangement adapted to implement a system for the remote control of an aircraft with redundancy comprises a pair of antennae A' and A" which are spaced apart on the body of the aircraft and preferably face towards a portion of space above the aircraft and a portion of space below the aircraft, respectively (for example, which are arranged on top of the fuselage and under a wing), and with which respective devices 10a and 10b for receiving different bands/frequencies are associated; the receiver devices 10a and 10b are adapted to receive in a redundant manner the command signals which come from a remote station, for example, a ground control station, and which are encoded in a continuous flow with PCM modulation, including continuous flight/service commands and discrete commands.

In the embodiment described, the receiver device 10a is adapted to receive signals on a first microwave transmission S-band and the receiver device 10b is adapted to receive signals on a second, alternative UHF transmission band.

Respective decommutating modules 12a and 12b are connected downstream of the receiver devices 10a and 10b for the conversion of the PCM signal into serial signals in accordance with the RS232 standard format; the decommutating modules 12a and 12b have respective first, PCM-format data and clock outputs 14a, 14b, respective second, synchronism or frame-locking state outputs 16a, 16b, respective third discrete-command serial signal outputs 18a, 18b, and respective fourth continuous flight-command serial signal outputs 20a, 20b.

A discrete command signal-processing unit 30a (30b) is connected to the outputs 16a, 18a and 20a (16b, 18b and 20b) by means of corresponding inputs 36a, 38a and 40a (36b, 38b and 40b).

Each discrete-command signal-processing unit 30a, 30b has a first frame-locking output 42a, 42b and a second flight-command serial-signal output 44a, 44b which are adapted to transfer downstream the signals that are received at the inputs 36a, 36b and 40a, 40b.

Each discrete-command signal-processing unit 30a, 30b is also arranged for the additional processing of the discrete command signals forming part of the PCM signal flow and has respective pairs of outputs 46a, 46b each comprising a first bundle of parallel data lines (7 in the example) and a second bundle of parallel data lines (16, in the example).

A priority selection unit 50 arranged downstream of the decommutating modules and of the discrete-command processing units has a first pair of inputs 52a, 52b which are connected to the outputs 14a, 14b in order to receive respective PCM data and clock signals, a second pair of inputs 54a, 54b which are connected to the outputs 44a, 44b in order to receive respective serial flight-command signals intended for a flight-control system, and a third pair of inputs 56a, 56b which are connected to the first bundle of parallel data lines that are available at the outputs 46a, 46b carrying discrete command signals.

Each pair of inputs 52a, 52b; 54a, 54b and 56a, 56b of the priority selection unit 50 is connected to the input terminals of a respective common switching device 62, 64, 66.

The switching device 62 has a PCM signal output terminal for the emission of the better PCM data and clock signal, the switching device 64 has an output terminal for a serial signal in RS232 format for the emission of the best flight-command signal, and the switching device 66 has an output bundle of parallel data lines (7 in the example) for the emission of the best discrete command signal.

The priority selection unit also has a control input which is common to the switching devices 62, 64, 66 and is connected to the frame-locking outputs 42a, 42b of the discrete-command signal-processing units 30a, 30b.

The second bundle of parallel data lines (16 in the example) at the outputs 46a, 46b of the discrete-command signal-processing units 30a, 30b directly supplies the input of a switching device 70 which permits an extension of the number of discrete commands under the same laws of operation as the priority selection unit 50.

In operation, the command signal which is transmitted from the ground in synchronous PCM mode comprises the continuous command data and the discrete command data, the latter being replicated and transmitted with intercalated bits, that is, with the replication of each data bit, making up a sequence of pairs of identical bits.

On board the aircraft, the decommutating modules supply a serial signal which is divided into successive frames each dedicated to a command and comprising, for example, a synchronism word, a word identifying the type of command, and one or more data words adapted to define the parameters of the command.

The continuous command-data signals which are directed towards the control of flight operations are processed by the priority selection unit 50 in accordance with the prior art.

The priority selection unit is arranged to receive the continuous command data and the discrete command data supplied by the decommutating modules and by the discrete-command processing unit, selecting, for each type of command, the signals which are discriminated as being the best signals on the basis of the value of a synchronism or frame-locking state signal emitted at the outputs 16a, 16b of the decommutating modules, as a result of the decoding and unpacking of the PCM flow for its conversion into serial format in accordance with the RS232 standard.

The continuous command data which are discriminated as being the best data are made available to an on-board flight-control system for the interpretation and execution of the flight commands.

In the operating logic, in the presence of useful signals in both receiving units, the S-band transmission channel (input 54a) is preferred and, in the event of poor reception or the reception of signals that are recognized as interfering, the priority selection unit switches to the alternative, UHF band (input 54b) by means of its own switching device 64. If this occurs, the priority selection unit preferably remains locked onto the alternative UHF-band channel and performs a subsequent switch to the S-band channel only if the reception conditions of the current UHF band signal becomes worse.

The operating logic of the discrete command-signal processing unit, however, is as follows.

The discrete commands are transmitted within the same PCM-encoded flow which transmits the continuous command signals, each in accordance with a redundancy rule which provides for the duplication of each information bit so that a command encoded in n bits is in practice transmitted as a sequence of 2n bits in identical pairs, that is, as pairs of identical commands with intercalated bits.

The processing units 30a, 30b are arranged to interpret the discrete command signals converted into RS232 serial format, making the pair of intercalated discrete signals available and restoring the command transmitted from the ground by means of a validation process which comprises an equality comparison which is triggered by the receipt of a synchronism signal at the input 36a, 36b and is performed on the state of each pair of consecutive bits, and a check that the same state persists for a predetermined number of consecutive transmission frames or cycles (for example, three cycles).

The signal is sent to the priority selection unit only if it is validated and may be selected therein from amongst other concurrent signals validated by the parallel discrete-signal processing units, in order to authorize an unambiguous command that is subsequently sent to a conventional implementation logic circuit which is not illustrated or described herein.

The switching devices 62, 64, 66 are preferably of the electromechanically operating type (relays) having a predefined default position (not shown in the drawing) corresponding to a predetermined command signal in the event of breakdown so that the setting of discrete commands in a predefined emergency state is ensured if an electrical breakdown such as a lack of power occurs in the priority selection unit 50.

In a currently preferred embodiment, each of the discrete command-signal processing units, even if it is not active, receives at its input the command data that have been processed by the parallel unit so as to refresh the datum and prevent an old command datum being held in the memory, for example, upon switching to an alternative transmission band, but always to have the last updated command at the output.

Naturally, the principle of the invention remaining the same, the forms of embodiment and details of construction may be varied widely with respect to those described and illustrated purely by way of non-limiting example, without thereby departing from the scope of protection of the present invention defined by the appended claims.

## Claims

1. A method for the remote control of aircraft, comprising the transmission of a flow of command signals from a ground station to a receiving arrangement (A', A", 10a, 10b) on board an aircraft in accordance with a predefined encoding protocol, and the processing of the flow of command signals in the on-board receiving arrangement (12a, 12b, 30a, 30b, 50) for the interpretation of the command signals and their implementation, the flow of command signals comprising continuous command signals (20a, 20b) for controlling continuous flight operations, and discrete event command signals (18a, 18b) for the activation or de-activation of on-board apparatus or devices at discontinuous moments in time,
**characterized in that** the transmission of the discrete command signals comprises the transmission of discrete command frames, in which each command frame includes a command datum and its replica which are transmitted at intercalated bits so that the frame comprises a sequence of pairs of identical bits, and **in that**
the processing of the discrete command signals in the on-board arrangement (12a, 12b, 30a, 30b, 50) comprises the acquisition of the command frames, the reconstruction of a pair of command data for each frame by the separation of the intercalated bits of the pairs of bits, and equality comparison of the states of the corresponding bits of each pair of command data,
so that a command datum received which is identical to the respective paired datum is considered valid,
the method further comprising the transmission of a predetermined number of successive frames of the same discrete command (18a, 18b) and, in the receiving arrangement, checking that the condition of equality of the state of the bits corresponding to each pair of command data persists for the predetermined number of consecutive frames.

2. A method according to Claim 1, comprising the transmission of the flow of command signals in accordance with a PCM code.

3. A method according to Claim 2 in which the processing of the flow of command signals comprises the conversion of the PCM-encoded flow of command signals into a serial signal (18a, 18b, 20a, 20b) comprising a sequence of command frames.

4. A method according to any one of the preceding claims in which the processing of the flow of command signals includes discrimination between continuous command signals (20a, 20b) and discrete command signals (18a, 18b).

5. A method according to any one of the preceding claims, comprising the receipt of the flow of command signals by a plurality of receiver units (A', 10a; A", 10b) of the on-board arrangement and its processing on parallel channels (10a-56a; 10b-56b).

6. A method according to Claim 5, comprising the transmission of the flow of command signals in a plurality of different frequency bands.

7. A method according to Claim 6, comprising the transmission of the flow of command signals in the microwave S-band and in the UHF band.

8. A method according to any one of Claims 5 to 7, comprising switching between channels receiving the continuous command signals (20a, 20b) and the discrete command signals (18a, 18b) for the selection of preferred command signals on the basis of a predetermined criterion.

9. A method according to Claim 8 comprising switching between receiving channels and a predefined emergency command signal in the event of a breakdown.

10. A system for the remote control of aircraft, comprising means for transmitting a flow of command signals from a ground station to a receiving arrangement (A', A", 10a, 10b) on board an aircraft in accordance with a predefined encoding protocol, and means (12a, 30a; 12b, 30b) for processing the flow of command signals in the on-board receiving arrangement for the interpretation of the command signals and their implementation, the flow of command signals comprising continuous command signals (20a, 20b) for controlling continuous flight operations, and discrete event command signals (18a, 18b) for the activation or de-activation of on-board apparatus or devices at discontinuous moments in time,
**characterized in that** the transmission means are arranged to transmit discrete command frames in which each command frame includes a command datum and its replica at intercalated bits, so that the frame comprises a sequence of pairs of identical bits, and
the processing means (12a, 30a; 12b, 30b) are arranged for the acquisition of the command frames, for the reconstruction of a pair of command data for each frame by the separation of the intercalated bits of the pairs of bits, and for equality comparison of the states of the corresponding bits of each pair of command data,
so that a command datum received which is identical to the respective paired datum is considered valid,
wherein the transmission means are arranged to transmit a predetermined number of successive frames of the same discrete command, and the processing means (12a, 30a; 12b, 30b) are arranged to check that the condition of equality of the state of the corresponding bits of each pair of command data persists for the predetermined number of consecutive frames.

11. A system according to Claim 10 in which the flow of command signals is a PCM-encoded continuous signal.

12. A system according to Claim 11 in which the means for processing the flow of command signals comprise decommutating means (12a, 12b) arranged for the conversion of the PCM-encoded flow of command signals into a serial signal comprising a sequence of command frames.

13. A system according to Claim 12 in which the decommutating means (12a, 12b) can discriminate between continuous command signals (20a, 20b) and discrete command signals (18a, 18b).

14. A system according to any one of Claims 10 to 13 in which the on-board receiving arrangement comprises a plurality of receiver units (A', 10a; A", 10b) adapted to receive the flow of command signals on parallel channels.

15. A system according to Claim 14 in which the on-board receiving arrangement comprises a plurality of receiver units (A', 10a; A", 10b) which are tuned to respective different frequency bands.

16. A system according to Claim 15 in which the frequency bands comprise the microwave S-band and the UHF band.

17. A system according to any one of Claims 14 to 16, comprising priority selection means (50) which are adapted to perform the switching between channels receiving the continuous command signals and the discrete command signals for the selection of preferred command signals on the basis of a predetermined criterion.

18. A system according to Claim 17 in which the priority selection means (50) comprise electromechanically-operating switching means (62-66) having a predefined default position corresponding to a predetermined emergency command signal.

## Patentansprüche

1. Verfahren zur Fernsteuerung eines Luftfahrzeugs, umfassend das Übertragen eines Flusses von Befehlssignalen von einer Bodenstation zu einer empfangenden Anordnung (A', A'', 10a, 10b) an Bord eines Luftfahrzeugs gemäß einem vordefinierten Codierungsprotokoll und das Verarbeiten des Flusses von Befehlssignalen in der bordinternen empfangenden Anordnung (12a, 12b, 30a, 30b, 50) zur Auswertung der Befehlssignale und deren Umsetzung, wobei der Fluss von Befehlssignalen kontinuierliche Befehlssignale (20a, 20b) zum Steuern kontinuierlicher Flugvorgänge und ereignisorientierte Befehlssignale (18a, 18b) zur Einschaltung oder Abschaltung bordinterner Apparaturen oder Geräte zu diskontinuierlichen Zeitpunkten umfasst,
**dadurch gekennzeichnet, dass** das Übertragen der diskreten Befehlssignale das Übertragen diskreter Befehlsrahmen umfasst, wobei jeder Befehlsrahmen eine gegebene Befehlsgröße und deren Kopie umfasst, welche bei zwischengeschalteten Bits übertragen werden, so dass der Rahmen eine Sequenz von Paaren identischer Bits umfasst, und dass
das Verarbeiten der diskreten Befehlssignale in der bordinternen Anordnung (12a, 12b, 30a, 30b, 50) das Erfassen der Befehlsrahmen, das Rekonstruieren eines Paars von Befehlsgrößen für jeden Rahmen durch Trennung der zwischengeschalteten Bits der Bitpaare und einen Vergleich der Gleicheit der Zustände der übereinstimmenden Bits jedes Paars von Befehlsgrößen umfasst,
so dass eine empfangene Befehlsgröße, die mit der entsprechenden gepaarten Größe identisch ist, als gültig angesehen wird,
wobei das Verfahren weiters das Übertragen einer vorbestimmten Anzahl aufeinanderfolgender Rahmen desselben diskreten Befehls (18a, 18b) umfasst, sowie in der empfangenden Anordnung das Prüfen, ob die Bedingung der Gleichheit des Zustands der jedem Paar von Befehlgrößen entsprechenden Bits für die vorbestimmte Anzahl fortlaufender Rahmen fortbesteht.

2. Verfahren gemäß Anspruch 1, umfassend das Übertragen des Flusses von Befehlssignalen gemäß einem PCM-Code.

3. Verfahren gemäß Anspruch 2, wobei das Verarbeiten des Flusses von Befehlssignalen das Umwandeln des PCM-codierten Flusses von Befehlssignalen in ein serielles Signal (18a, 18b, 20a, 20b), umfassend eine Sequenz von Befehlsrahmen, umfasst.

4. Verfahren gemäß einem der vorhergehenden Ansprüche, wobei das Verarbeiten des Flusses von Befehlssignalen das Unterscheiden zwischen kontinuierlichen Befehlssignalen (20a, 20b) und diskreten Befehlssignalen (18a, 18b) umfasst.

5. Verfahren gemäß einem der vorhergehenden Ansprüche, umfassend den Empfang des Flusses von Befehlssignalen durch eine Mehrzahl von Empfängereinheiten (A', 10a; A'', 10b) der bordinternen Anordnung und dessen Verarbeitung auf parallelen Kanälen (10a-56a; 10b-56b).

6. Verfahren gemäß Anspruch 5, umfassend das Übertragen des Flusses von Befehlssignalen in einer Mehrzahl verschiedener Frequenzbänder.

7. Verfahren gemäß Anspruch 6, umfassend das Übertragen des Flusses von Befehlssignalen im Mikrowellen-S-Band und im UHF-Band.

8. Verfahren gemäß einem der Ansprüche 5 bis 7, umfassend das Umschalten zwischen die kontinuierlichen Befehlssignale (20a, 20b) und die diskreten Befehlssignale (18a, 18b) empfangenden Kanälen zur Auswahl bevorzugter Befehlssignale basierend auf einem vorbestimmten Kriterium.

9. Verfahren gemäß Anspruch 8, umfassend das Umschalten zwischen empfangenden Kanälen und einem vordefinierten Notbefehlssignal im Falle einer Betriebsstörung.

10. System zur Fernsteuerung eines Luftfahrzeugs, umfassend Mittel zum Übertragen eines Flusses von Befehlssignalen von einer Bodenstation zu einer empfangenden Anordnung (A', A'', 10a, 10b) an Bord eines Luftfahrzeugs gemäß einem vordefinierten Codierungsprotokoll und Mittel (12a, 30a; 12b, 30b) zum Verarbeiten des Flusses von Befehlssignalen in der bordinternen empfangenden Anordnung zur Auswertung der Befehlssignale und deren Umsetzung, wobei der Fluss von Befehlssignalen kontinuierliche Befehlssignale (20a, 20b) zum Steuern kontinuierlicher Flugvorgänge und ereignisorientierte Befehlssignale (18a, 18b) zur Einschaltung oder Abschaltung bordinterner Apparaturen oder Geräte zu diskontinuierlichen Zeitpunkten umfasst,
**dadurch gekennzeichnet, dass** die Übertragungsmittel dazu angeordnet sind, diskrete Befehlsrahmen zu übertragen, wobei jeder Befehlsrahmen eine Befehlsgröße und deren Kopie bei zwischengeschalteten Bits umfasst, so dass der Rahmen eine Sequenz von Paaren identischer Bits umfasst, und
die Verarbeitungsmittel (12a, 30a; 12b, 30b) für das Erfassen der Befehlsrahmen, für das Rekonstruieren eines Paars von Befehlsgrößen für jeden Rahmen durch Trennung der zwischengeschalteten Bits der Bitpaare und für einen Vergleich der Gleicheit der Zustände der übereinstimmenden Bits jedes Paars von Befehlsgrößen angeordnet sind,
so dass eine empfangene Befehlsgröße, die mit der entsprechenden gepaarten Größe identisch ist, als gültig angesehen wird,
wobei die Übertragungsmittel dazu angeordnet sind, eine vorbestimmte Anzahl aufeinanderfolgender Rahmen desselben diskreten Befehls zu übertragen, und die Verarbeitungsmittel (12a, 30a; 12b, 30b) dazu angeordnet sind zu prüfen, ob die Bedingung der Gleichheit des Zustands der übereinstimmenden Bits jedes Paars von Befehlgrößen für die vorbestimmte Anzahl fortlaufender Rahmen fortbesteht.

11. System gemäß Anspruch 10, wobei der Fluss von Befehlssignalen ein PCM-codiertes kontinuierliches Signal ist.

12. System gemäß Anspruch 11, wobei die Mittel zum Verarbeiten des Flusses von Befehlssignalen Dekommutierungsmittel (12a, 12b) umfassen, die für die Umwandlung des PCM-codierten Flusses von Befehlssignalen in ein serielles Signal, umfassend eine Sequenz von Befehlsrahmen, angeordnet sind.

13. System gemäß Anspruch 12, wobei die Dekommutierungsmittel (12a, 12b) zwischen kontinuierlichen Befehlssignalen (20a, 20b) und diskreten Befehlssignalen (18a, 18b) unterscheiden können.

14. System gemäß einem der Ansprüche 10 bis 13, wobei die bordinterne empfangende Anordnung eine Mehrzahl von Empfängereinheiten (A', 10a; A", 10b) umfasst, die dazu angepasst sind, den Fluss von Befehlssignalen auf parallelen Kanälen zu empfangen.

15. System gemäß Anspruch 14, wobei die bordinterne empfangende Anordnung eine Mehrzahl von Empfängereinheiten (A', 10a; A'', 10b) umfasst, die auf verschiedene Frequenzbänder eingestellt sind.

16. System gemäß Anspruch 15, wobei die Frequenzbänder das Mikrowellen-S-Band und das UHF-Band umfassen.

17. System gemäß einem der Ansprüche 14 bis 16, umfassend Prioritätsauswahlmittel (50), die dazu angepasst sind, das Umschalten zwischen die kontinuierlichen Befehlssignale und die diskreten Befehlssignale empfangenden Kanälen zur Auswahl bevorzugter Befehlssignale basierend auf einem vorbestimmten Kriterium durchzuführen.

18. System gemäß Anspruch 17, wobei die Prioritätsauswahlmittel (50) elektromechanisch funktionierende Schaltmittel (62-66) umfassen, welche eine vordefinierte Standardposition aufweisen, die einem vorbestimmten Notbefehlssignal entspricht.

## Revendications

1. Procédé de commande à distance d'aéronef, comprenant la transmission d'un flux de signaux de commande depuis une station au sol vers un agencement de réception (A', A", 10a, 10b) à bord d'un aéronef selon un protocole de codage prédéfini, et le traitement du flux de signaux de commande dans l'agencement de réception à bord (12a, 12b, 30a, 30b, 50) pour l'interprétation des signaux de commande et leur mise en oeuvre, le flux de signaux de commande comprenant des signaux de commande continus (20a, 20b) pour commander les opérations de vol en continu, et des signaux de commande discrets (18a, 18b) pour l'activation ou la désactivation d'appareils ou de dispositifs à bord à des moments discontinus dans le temps,
**caractérisé en ce que** la transmission des signaux de commande discrets comprend la transmission de trames de commande discrètes, dans lesquelles chaque trame de commande inclut une donnée de commande et ses répliques qui sont transmises à des bits intercalés de telle manière que la trame comprend une séquence de paires de bits identiques, et **en ce que**
le traitement des signaux de commande discrets dans l'agencement à bord (12a, 12b, 30a, 30b, 50) comprend l'acquisition des trames de commande, la reconstruction d'une paire de données de commande pour chaque trame par la séparation des bits intercalés des paires de bits, et une comparaison d'égalité des états des bits correspondants de chaque paire de données de commande,
de telle manière qu'une donnée de commande reçue qui est identique à la donnée appariée respective est considérée comme valide,
le procédé comprenant en outre la transmission d'un nombre prédéterminé de trames successives de la même commande discrète (18a, 18b) et, dans l'agencement de réception, la vérification que la condition d'égalité de l'état des bits correspondants à chaque paire de données de commande persiste pour le nombre prédéterminé de trames consécutives.

2. Procédé selon la revendication 1, comprenant la transmission du flux de signaux de commande selon un code MIC.

3. Procédé selon la revendication 2 dans lequel le traitement du flux de signaux de commande comprend la conversion du flux de signaux de commande codé en MIC en un signal série (18a, 18b, 20a, 20b) comprenant une séquence de trames de commande.

4. Procédé selon l'une quelconque des revendications précédentes dans lequel le traitement du flux de signaux de commande inclut la discrimination entre les signaux de commande continus (20a, 20b) et les signaux de commande discrets (18a, 18b).

5. Procédé selon l'une quelconque des revendications précédentes, comprenant la réception du flux de signaux de commande par une pluralité d'unités de récepteur (A', 10a; A", 10b) de l'agencement à bord et son traitement sur des canaux parallèles (10a-56a; 10b-56b).

6. Procédé selon la revendication 5, comprenant la transmission du flux de signaux de commande dans une pluralité de bandes de fréquence différentes.

7. Procédé selon la revendication 6, comprenant la transmission du flux de signaux de commande dans la bande S des microondes et dans la bande UHF.

8. Procédé selon l'une quelconque des revendications 5 à 7, comprenant de commuter entre des canaux recevant les signaux de commande continus (20a, 20b) et les signaux de commande discrets (18a, 18b) pour la sélection des signaux de commande préférés en fonction d'un critère prédéterminé.

9. Procédé selon la revendication 8 comprenant de commuter entre des canaux de réception et un signal de commande d'urgence prédéfini dans le cas d'une panne.

10. Système de commande à distance d'aéronef, comprenant des moyens de transmission d'un flux de signaux de commande depuis une station au sol vers un agencement de réception (A', A", 10a, 10b) à bord d'un aéronef selon un protocole de codage prédéfini, et des moyens de traitement (12a, 30a; 12b, 30b) pour le traitement du flux de signaux de commande dans l'agencement de réception à bord pour l'interprétation des signaux de commande et leur mise en oeuvre, le flux de signaux de commande comprenant des signaux de commande continus (20a, 20b) pour commander les opérations de vol en continu, et des signaux de commande discrets (18a, 18b) pour l'activation ou la désactivation d'appareils ou de dispositifs à bord à des moments discontinus dans le temps,
**caractérisé en ce que** les moyens de transmission sont agencés pour transmettre des trames de commande discrètes, dans lesquelles chaque trame de commande inclut une donnée de commande et ses répliques à des bits intercalés, de telle manière que la trame comprend une séquence de paires de bits identiques, et
les moyens de traitement (12a, 30a; 12b, 30b) sont agencés pour l'acquisition des trames de commande, pour la reconstruction d'une paire de données de commande pour chaque trame par la séparation des bits intercalés des paires de bits, et pour une comparaison d'égalité des états des bits correspondants de chaque paire de données de commande,
de telle manière qu'une donnée de commande reçue qui est identique à la donnée appariée respective est considérée comme valide,
dans lequel les moyens de transmission sont agencés pour la transmission d'un nombre prédéterminé de trames successives de la même commande discrète, et les moyens de traitement (12a, 30a; 12b, 30b) sont agencés pour vérifier la condition d'égalité de l'état des bits correspondants à chaque paire de données de commande persiste pour le nombre prédéterminé de trames consécutives.

11. Système selon la revendication 10 dans lequel le flux de signaux de commande est un signal continu codé en MIC.

12. Système selon la revendication 11 dans lequel les moyens pour traiter le flux de signaux de commande comprennent des moyens de décommutation (12a, 12b) agencés pour la conversion du flux de signaux de commande codé en MIC en un signal en série comprenant une séquence de trames de commande.

13. Système selon la revendication 12 dans lequel les moyens de décommutation (12a, 12b) peuvent discriminer entre des signaux de commande continus (20a, 20b) et des signaux de commande discrets (18a, 18b).

14. Système selon l'une quelconque des revendications 10 à 13 dans lequel l'agencement de réception à bord comprend une pluralité d'unités de récepteur (A', 10a; A", 10b) adaptées pour recevoir le flux de signaux de commande sur des canaux parallèles.

15. Système selon la revendication 14 dans lequel l'agencement de réception à bord comprend une pluralité d'unités de réception (A', 10a; A", 10b) qui sont syntonisées à des bandes de fréquence respectives différentes.

16. Système selon la revendication 15 dans lequel les bandes de fréquence comprennent la bande S des microondes et la bande UHF.

17. Système selon l'une quelconque des revendications 14 à 16 comprenant des moyens de sélection de priorité (50) qui sont adaptés pour réaliser la commutation entre des canaux recevant les signaux de commande continus et les signaux de commande discrets pour la sélection des signaux de commande préférés en fonction d'un critère prédéterminé.

18. Système selon la revendication 17 dans lequel les moyens de sélection de priorité (50) comprennent des moyens de commutation actionnés électromécaniquement (62-66) ayant une position par défaut prédéfinie correspondant à un signal de commande d'urgence prédéterminé.
